# EUROPÄISCHE PATENTANMELDUNG

(11) **EP 3 547 048 A1**
(43) Veröffentlichungstag der Anmeldung: **02.10.2019**
(21) Anmeldenummer: 18020115.4
(22) Anmeldetag: 27.03.2018
(51) Int. Cl.: G05B 17/02, G06F 17/50

(54) **VERFAHREN ZUM DIMENSIONIEREN EINER PROZESSANLAGE**

(71) Anmelder: Linde Aktiengesellschaft, 80331 München (DE)
(72) Erfinder: Windmeier, Christoph, 82538 Geretsried (DE); Lautenschlager, Tobias, 82194 Gröbenzell (DE); Wunderlich, Bernd, 82319 Starnberg (DE)
(74) Vertreter: Imhof, Dietmar

(57) **Zusammenfassung**

Die vorliegende Erfindung betrifft ein Verfahren zum Dimensionieren einer Prozessanlage, insbesondere einer Luftzerlegungsanlage oder einer Erdgasanlage, zum Durchführen eines chemischen, verfahrenstechnischen Prozesses, wobei eine Vielzahl von Prozesssimulationen durchgeführt wird, im Zuge derer jeweils der Prozess in der Prozessanlage jeweils für verschiedene Werte von Prozessanlagengrößen und für verschiedene Werte von Prozessparametern simuliert wird, wobei für die Vielzahl von Simulationen jeweils Gewichtungen für verschiedene Werte von Prozessparametern berücksichtigt werden, wobei aus den verschiedenen Simulationen optimale Werte für die Prozessanlagengrößen und/oder für die Prozessparameter derart ausgewählt werden, dass wenigstens eine vorgegebene Bedingung erfüllt ist.

## Beschreibung

Die Erfindung betrifft ein Verfahren zum Dimensionieren einer Prozessanlage zum Durchführen eines chemischen, verfahrenstechnischen Prozesses, insbesondere einer Luftzerlegungsanlage oder einer Erdgasanlage.

### Hintergrund der Erfindung

Im Zuge einer Planungs- bzw. Auslegungsphase wird eine Prozessanlage zunächst dimensioniert, bevor die Prozessanlage gemäß der entsprechenden gewählten Dimensionierung an einem entsprechenden Standort konstruiert bzw. errichtet und letztendlich in Betrieb genommen wird, um einen chemischen, verfahrenstechnischen Prozess durchzuführen.

Im Zuge eines Dimensionierens können insbesondere Größen der Prozessanlage, beispielsweise die Dimensionen bzw. Kapazitäten einzelner Elemente und Komponenten der Prozessanlage oder der spezifische Typ verschiedener Komponenten, gewählt werden, ebenso wie Prozessparameter, gemäß welchen der verfahrenstechnische Prozess letztendlich durchgeführt werden soll.

### Offenbarung der Erfindung

Ausgehend von diesem Stand der Technik wird ein Verfahren zum Dimensionieren einer Prozessanlage zum Durchführen eines chemischen, verfahrenstechnischen Prozesses mit den Merkmalen des Patentanspruchs 1 vorgeschlagen. Vorteilhafte Ausführungsformen sind jeweils Gegenstand der Unteransprüche sowie der nachfolgenden Beschreibung.

Die Prozessanlage kann insbesondere eine Luftzerlegungsanlage oder allgemein eine Fluidzerlegungsanlage oder eine Erdgasanlage sein. Der verfahrenstechnische Prozess ist demgemäß insbesondere eine Luftzerlegung bzw. eine Erdgasverflüssigung.

Unter Dimensionieren der Prozessanlage sei in diesem Zusammenhang insbesondere zu verstehen, dass konkrete Werte für Prozessanlagengrößen und/oder für Prozessparameter bestimmt werden, gemäß welchen die Prozessanlage konstruiert und gebaut werden soll und gemäß welchen der verfahrenstechnische, chemische Prozess in dieser Prozessanlage durchgeführt werden soll.

Im Rahmen des Verfahrens wird eine Vielzahl von Prozesssimulationen durchgeführt, im Zuge derer jeweils der Prozess in der Prozessanlage für verschiedene Werte von Prozessanlagengrößen und/oder für verschiedene Werte von Prozessparametern simuliert wird. Für die Vielzahl von Simulationen werden jeweils Gewichtungen für verschiedene Werte von Prozessparametern berücksichtigt. Aus den verschiedenen Simulationen werden optimale Werte für die Prozessanlagengrößen und/oder für die Prozessparameter derart ausgewählt, dass wenigstens eine vorgegebene Bedingung erfüllt ist.

Unter Prozessanlagengrößen oder auch Auslegungsgrößen seien in diesem Zusammenhang insbesondere Größen zu verstehen, welche die Prozessanlage und weiter insbesondere einzelne Komponenten der Prozessanlage beschreiben bzw. charakterisieren. Beispielsweise können diese Prozessanlagengrößen Dimensionen von verschiedenen Komponenten der Prozessanlage sein, z.B. Durchmesser, Länge, Höhe, Breite usw. Beispielsweise können diese Prozessanlagengrößen auch den konkreten Typ einzelner Komponenten bzw. Einheiten beschreiben, z.B. welche konkrete Pumpe verwendet wird oder welche konkrete Leistung diese Pumpe besitzt oder mit welchem konkreten Druck diese Pumpe ein Fluid beaufschlagt. Veränderungen der Werte dieser Prozessanlagengrößen wirken sich insbesondere direkt auf den in der Prozessanlage durchgeführten verfahrenstechnischen Prozess aus. Verschiedene Werte für die Prozessanlagengrößen charakterisieren insbesondere verschiedene Prozesstopologien bzw. Prozessanlagentopologien, und charakterisieren insbesondere konkrete Ausgestaltung der Prozessanlage. Unter dem Begriff Prozesstopologie sei in diesem Kontext nicht nur die Art und Weise der Verschaltung unterschiedlicher verfahrenstechnischer Apparate zu verstehen, sondern der Begriff Prozesstopologie wird in diesem Zusammenhang zweckmäßigerweise ebenfalls für eine identische Verschaltung bei Variation von Ausführungsformen eines verfahrenstechnischen Apparats verwendet.

Unter Prozessparameter seien in diesem Zusammenhang insbesondere Größen zu verstehen, welche direkt den verfahrenstechnischen Prozess beschreiben. Insbesondere charakterisieren diese Prozessparameter Betriebsfälle, gemäß welchen die Prozessanlage gefahren werden kann bzw. gemäß welchen der Prozess in der Prozessanlage durchgeführt wird. Verschiedene Werte der Prozessparameter charakterisieren insbesondere verschiedene Prozessvarianten, gemäß welchen der verfahrenstechnische Prozess durchgeführt werden kann. Beispielsweise können diese Prozessparameter Edukt- und/oder Produktspezifikationen des verfahrenstechnischen Prozesses betreffen.

Durch die Gewichtungen der Prozessparameter bzw. der Werte der Prozessparameter kann insbesondere vorgegeben werden, wie relevant einzelne Prozessparameter bzw. einzelne Werte verschiedener Prozessparameter sind. Beispielsweise kann vorgegeben werden, dass eine hohe Produktqualität eine größere Gewichtung besitzt als eine hohe Produktmenge.

Im Zuge der verschiedenen Prozesssimulationen werden die Prozessanlage bzw. die einzelnen Komponenten der Prozessanlage sowie die in diesen Komponenten stattfindenden chemischen Teilprozesse des verfahrenstechnischen Prozesses insbesondere modelliert bzw. theoretisch beschrieben. Insbesondere werden die einzelnen Komponenten der Prozessanlage bzw. die darin stattfindenden physikalischen und chemischen Teilprozesse mittels chemischer, physikalischer, mathematischer Gleichungen beschrieben.

Als Grundlage zur Beschreibung verfahrenstechnischer Apparate dienen beispielsweise Bilanzgleichungen für Masse, Spezies, Energie und Impuls, der 2. Hauptsatz der Thermodynamik, Transportgleichungen für Spezies, Energie und Impuls, stoffliche und chemische Gleichgewichtsbeziehungen bzw. Reaktionsgleichungen sowie empirische und semiempirische Korrelationsbeziehungen zwischen o.g. Aspekten oder logische Verknüpfungen von verschiedenen Prozessparametern.

Für eine detaillierte Beschreibung zur Abbildung verfahrenstechnischer Prozesse über mathematische Gleichungen wird an dieser Stelle beispielsweise verwiesen auf *"*Kraume, Matthias: Transportvorgänge in der Verfahrenstechnik: Grundlagen und apparative Umsetzungen. Springer Vieweg, Berlin [u.a.], 2., bearb. Auflage, 2012. ISBN: 978-3-642-25148-1*"*.

Zum Durchführen der Prozesssimulationen werden insbesondere Flussdiagramme ("flow sheet") verwendet. Mittels eines derartigen Flussdiagramms können die einzelnen Komponenten der Prozessanlage sowie ihre insbesondere fluid- und verfahrenstechnischen Verbindungen untereinander abgebildet werden. Entsprechende die Teilprozesse bzw. Komponenten charakterisierende chemische, physikalische, mathematische Gleichungen werden zweckmäßigerweise als Grundlage für derartige Flussdiagramme verwendet.

Eine konkrete Prozesssimulation bzw. ein konkretes Flussdiagramm mit konkreten Werten der einzelnen Prozessanlagengrößen stellt somit ein theoretisches Abbild bzw. Modell einer konkreten Prozessanlage dar. Mittels einer derartigen konkreten Prozesssimulation bzw. eines derartigen konkreten Flussdiagramms kann somit simuliert werden, wie der verfahrenstechnische Prozess auf unterschiedliche Weisen, also bei verschiedenen Werten der Prozessparameter in dieser konkreten Prozessanlage theoretisch abläuft.

Im Zuge der Prozesssimulationen kann somit insbesondere modelliert werden, dass in derselben Prozessanlage, also in einer Prozessanlage mit denselben konstanten Werten für die Prozessanlagengrößen und somit mit derselben Prozesstopologie, der Prozess auf unterschiedliche Prozessvarianten durchgeführt wird, also mit unterschiedlichen Werten einzelner Prozessparametern. Somit kann insbesondere erkannt werden, wie sich in derselben Prozessanlage Veränderungen von einzelnen Prozessparametern auswirken.

Ferner wird im Zuge der Prozesssimulationen zweckmäßigerweise eine Vielzahl verschiedener Prozesstopologien, also eine Vielzahl verschiedener Werte für die Prozessanlagengrößen, jeweils auf unterschiedliche Betriebsbedingungen hin untersucht. Somit kann insbesondere erkannt werden, wie sich Veränderungen von einzelnen Prozessparametern bei verschiedenen Prozesstopologien auf das Gesamtverfahren auswirken.

Durch die Gewichtungen der Prozessparameter bzw. der Werte der Prozessparameter kann insbesondere bewertet werden, wie relevant die Auswirkungen auf den Prozess bei einer Veränderung der Werte der Prozessparameter sind. Zweckmäßigerweise sind Korrelationen der Veränderungen von Prozessanlagengrößen und Prozessparametern parallel bzw. simultan in den einzelnen Prozesssimulationen implementiert. Insbesondere sind Korrelationen bzw. Abhängigkeiten einzelner Betriebsfälle bzw. einzelner Prozessvarianten untereinander implementiert.

Aus dieser Vielzahl von voneinander abhängigen bzw. miteinander korrelierenden Prozesssimulationen wird im Rahmen des Verfahrens ein optimaler Satz an Werten für die Prozessanlagengrößen und/oder die Prozessparameter ausgewählt. Die Auswahl dieser optimalen Werte wird insbesondere derart durchgeführt, dass wenigstens eine vorgegebene Bedingung erfüllt ist. Diese Bedingungen können insbesondere von verschiedenen Faktoren abhängen, welche insbesondere eine Wirtschaftlichkeit und Effektivität der Prozessanlage beschreiben. Beispielsweise kann diese Bedingung als eine Zielfunktion implementiert werden, wobei sämtliche Prozesssimulationen parallel und insbesondere simultan über diese Zielfunktion optimiert werden.

Insbesondere werden somit im Rahmen des Verfahrens ein optimaler Satz von Werten für die Prozessanlagengrößen und ein optimaler Satz von Werten für die Prozessparameter in Abhängigkeit voneinander simultan bestimmt. Zweckmäßigerweise werden somit eine optimale Topologie für die Prozessanlage sowie eine für diese Topologie optimale Prozessvariante bestimmt. Insbesondere werden die optimalen Werte für die Prozessanlagengröße und die Prozessparameter derart bestimmt, dass eine optimierte Prozessanlage konstruiert werden kann und dass der Prozess in dieser Prozessanlage möglichst effektiv und möglichst wirtschaftlich bzw. nach den gewählten Kriterien durchgeführt werden kann.

Das Verfahren wird insbesondere durchgeführt, bevor die Prozessanlage konstruiert bzw. gebaut wird, beispielsweise im Zuge einer Planungsphase der Prozessanlage. Insbesondere kann zu Beginn der Planungsphase lediglich vorgegeben sein, welcher verfahrenstechnische, chemische Prozess von der Prozessanlage durchzuführen sein soll, beispielsweise eine Luftzerlegung oder Erzeugung von flüssigem Erdgas, und an welchem Standort die Prozessanlage entstehen soll, also unter welchen Umgebungsbedingungen der Prozess in der Prozessanlage durchgeführt werden soll. Im Zuge der Planungsphase, insbesondere im Zuge des vorliegenden Verfahrens, wird die Prozessanlage insbesondere derart entworfen, dass diese an ihrem entsprechenden Standort möglichst effektiv und möglichst wirtschaftlich nach den im konkreten Fall gewählten Kriterien betrieben werden kann.

Im Rahmen von herkömmlichen Verfahren zum Planen, Konstruieren bzw. Dimensionieren von Prozessanlagen werden zumeist zunächst zu dimensionierende Parameter einer Prozessanlage an einem Auslegungsfall bestimmt. Anschließend erfolgt die Nachrechnung bzw. Überprüfung von weiteren Lastfällen in Abhängigkeit von diesem Auslegungsfall. Ist es nicht möglich alle relevanten Betriebsfälle mit dem Design des Auslegungsfalls zu betreiben, erfolgt zumeist eine Anpassung der dimensionierenden Parameter, so dass sich eine Betreibbarkeit der Anlage in allen berücksichtigen Fällen ergibt. Dies geschieht zumeist iterativ und manuell. Hierbei sind oftmals langwierige Iterationen notwendig, falls das gewählte Design nicht für alle spezifizierten Betriebsfälle betreibbar ist. Ein optimales Design, insbesondere für eine Vielzahl von zu berücksichtigenden Betriebsfällen, ist mit einer derartigen iterativen Methode oft nicht auffindbar, da das gewähltes Design von optimalem Design für mehrere Betriebsfälle abweichen kann.

Im Gegensatz zu derartigen herkömmlichen Verfahren wird im Rahmen der Erfindung eine Vielzahl von verschiedenen Prozesssimulationen simultan durchgeführt, welche insbesondere voneinander abhängen und miteinander korrelieren. Auswirkungen von Wertveränderungen in einer Prozesssimulation werden zweckmäßigerweise parallel und simultan in den übrigen Prozesssimulationen berücksichtigt. Somit sind keine manuellen, langwierigen Iterationen notwendig. Die Erfindung erlaubt die Ermittlung von zu dimensionierenden Größen und die Optimierung einer komplexen Prozessanlage unter simultaner Berücksichtigung einer Vielzahl von Betriebsfällen. Derartige komplexe Prozessanlagen weisen insbesondere hochgradige thermische und/oder stoffliche Rückkopplungen auf sowie ein stark reales Stoffverhalten mit Phasenübergängen, also kein Idealgasverhalten, und insbesondere Abweichungen in den Spezifikationen von Edukten und/oder Produkten und/oder Umgebungsbedingungen für verschiedene Betriebsfälle.

Die ausgewählten optimalen Werte für die Prozessanlagengrößen sind zweckmäßigerweise optimal auf die gewählten Betriebsfälle und deren Gewichtung ausgelegt. Ferner werden die optimalen Werte für die Prozessanlagengrößen und Prozessparameter zweckmäßigerweise so gewählt, dass die Prozessanlage ein breites Wirkungsgradspektrum über mehrere Betriebsfälle erhält. Bei einer wirtschaftlichen Anlagenlebensdauer von 20 bis 35 Jahren wird in der Praxis mit hoher Wahrscheinlichkeit ein breites Spektrum an Lastfällen gefahren.

Vorteilhafterweise wird für die Vielzahl von Prozesssimulationen simultan oder zumindest im Wesentlichen simultan überprüft, ob die wenigstens eine vorgegebene Bedingung erfüllt ist. Bei dieser simultanen Überprüfung werden insbesondere automatisch die Abhängigkeiten bzw. Korrelationen der einzelnen Betriebsfälle und Prozesstopologien untereinander berücksichtigt.

Als Prozessparameter werden vorteilhafterweise eine oder mehrere der folgenden Größen verwendet: eine Produktmenge, eine Produktqualität, eine Eduktmenge, eine Eduktqualität, eine Umgebungsbedingung, ein Energiepreis, eine Vergütungsbedingung, insbesondere für Bereitstellungen von Energiesystemdienstleistungen, eine Verfügbarkeit von Komponenten der Prozessanlage, bauliche oder transportbedingte Randbedingungen an die verfahrenstechnischen Komponenten. Durch Verändern der Werte derartiger Prozessparameter, insbesondere von Produktmenge und -qualität sowie Eduktmenge und -qualität, kann insbesondere eine Vielzahl verschiedener Produkt- und Eduktbedingungen berücksichtigt werden.

Vorzugsweise hängt die wenigstens eine vorgegebene Bedingung von wenigstens einer Kostengröße ab. Als Kostengröße sind insbesondere Größen zu verstehen, auf die hin der Betrieb der Anlage optimiert werden soll, insbesondere um eine möglichst hohe Effektivität und Wirtschaftlichkeit der Prozessanlage zu ermöglichen.

Die wenigstens eine vorgegebene Bedingung ist vorteilhafterweise erfüllt, wenn die wenigstens eine Kostengröße eine Schwelle nicht über- oder unterschreit und/oder möglichst groß oder möglichst klein ist. Somit kann ein effektiver und wirtschaftlicher Betrieb der Prozessanlage erreicht werden. Insbesondere sollen auch mehrere solcher Randbedingungen gleichzeitig eingehalten werden, so dass eine Mehrgrößenoptimierung vorliegt.

Bevorzugt werden eine oder mehrere der folgenden Größen als die wenigstens eine Kostengröße verwendet: ein Bedarf an Betriebsmitteln, ein Bedarf an Energie, ein Produktbedarf, eine Eduktverfügbarkeit, Betriebskosten, Investitionskosten, Einhaltung von Baubarkeitsbeschränkungen, Produktausbeuten, Einsatzstoffmengen, eine Prozessanlagenbelastung, eine Prozessanlagenlebensdauer. Eine Minimierung bzw. Maximierung bzw. das nicht Über- oder Unterschreiten einer Schwelle derartiger Kostengrößen wirkt sich somit insbesondere auf die Wirtschaftlichkeit und Effektivität der Prozessanlage aus.

Vorteilhafterweise werden als Prozessanlagengrößen eine oder mehrere einen Wärmeübertrager der Prozessanlage charakterisierende Größen verwendet, insbesondere eine gesamte Wärmeübertragerfläche und/oder eine Aufteilung von Wärmeübertragerflächen zwischen Seitenabzügen. Ein Wärmeübergangskoeffizient ist in erster Näherung insbesondere von der Strömungsgeschwindigkeit und damit dem Durchsatz, sowie der Zusammensetzung der Ströme in dem Wärmeübertrager abhängig. Die relative, geometrische Lage von Seitenabzügen ist insbesondere konstant.

Alternativ oder zusätzlich werden als Prozessanlagengrößen vorzugsweise eine oder mehrere eine Fluidströmung durch die Prozessanlage beeinflussende Größen verwendet, insbesondere ein Strömungsquerschnitt und/oder ein Durchmesser eines Elements der Prozessanlage, z.B. von Rohrleitungen und/oder Apparaten. Druckverluste in Rohrleitungen und Apparaten sind in erster Näherung insbesondere von der Strömungsgeschwindigkeit abhängig. Als optimale Werte für derartige Prozessanlagengrößen werden Strömungsquerschnitte insbesondere entweder frei oder aus Katalogen von definierten Durchmessern bestimmt.

Alterativ oder zusätzlich werden als Prozessanlagengrößen vorzugsweise eine oder mehrere Dimensionen der Prozessanlage verwendet, insbesondere ein Kolonnendurchmesser und/oder eine Kolonnenhöhe. Wirksamkeiten von Stoffübergängen sind insbesondere von der Gas- und Flüssigkeitsbelastung und - zusammensetzung abhängig, Druckverluste insbesondere von der Strömungsgeschwindigkeit und der theoretischen Bodenzahl.

Alternativ oder zusätzlich werden als Prozessanlagengrößen eine oder mehrere einen Wirkungsgrad des Prozesses beeinflussenden Größen verwendet, insbesondere ein Designpunkt der Prozessanlage und deren Komponenten, vorzugsweise ein Massenstrom, ein Saugdruck, ein Enddruck, eine Eintrittstemperatur usw. Der Wirkungsgrad ist insbesondere vom Massenstrom, dem Saug- sowie Enddruck und von der Eintrittstemperatur abgängig. Insbesondere werden zu diesem Zweck Interpolationen mittels dimensionsloser Maschinenkennfelder durchgeführt.

Vorteilhafterweise sind Randbedingungen für Komponenten der Prozessanlage vorgegeben. Diese Randbedingungen werden zweckmäßigerweise im Zuge der Prozesssimulationen und der Auswahl der optimalen Werte berücksichtigt. Insbesondere kann durch diese Randbedingungen der Betrieb verschiedener Komponenten der Prozessanlage in technisch realisierbaren Bereichen vorgegeben werden. Vorzugsweise werden eine oder mehrere der folgenden Größen als derartige Randbedingungen vorgegeben: thermische Spannungen in Wärmeübertragern, hydraulische Begrenzungen unterschiedlicher verfahrenstechnischer Apparate, z.B. Flutpunkte von Kolonneneinbauten, Pump- und Belastungsgrenzen sowie spezifische Drehzahlen von Maschinen.

Gemäß einer bevorzugten Ausführungsform ist die Prozessanlage eine Fluidzerlegungsanlage, besonders bevorzugt eine Luftzerlegungsanlage. Der chemische, verfahrenstechnische Prozess ist somit vorteilhafterweise eine Fluidzerlegung und besonders bevorzugt eine Luftzerlegung. Eine Luftzerlegungsanlage weist als Komponenten insbesondere Destillationssäulensysteme auf, die beispielsweise als Zweisäulensysteme, insbesondere als klassische Linde-Doppelsäulensysteme, aber auch als Drei- oder Mehrsäulensysteme ausgebildet sein können. Neben den Destillationssäulen zur Gewinnung von Stickstoff und/oder Sauerstoff in flüssigem und/oder gasförmigem Zustand (beispielsweise flüssiger Sauerstoff, LOX, gasförmiger Sauerstoff, GOX, flüssiger Stickstoff, LIN und/oder gasförmiger Stickstoff, GAN), also den Destillationssäulen zur Stickstoff-Sauerstoff-Trennung, können Destillationssäulen zur Gewinnung weiterer Luftkomponenten, insbesondere der Edelgase Krypton, Xenon und/oder Argon, vorgesehen sein. Destillationssäulen werden auch als Destillationskolonnen bezeichnet. Im Rahmen des Verfahrens können zweckmäßigerweise einzelne oder insbesondere alle derartigen Komponenten der Luftzerlegungsanlage sowie die darin stattfindenden Teilprozesse dimensioniert werden. Beispielsweise kann im Rahmen der Erfindung eine Dimensionierung einer Destillationskolonne einer Fluidzerlegungsanlage durchgeführt werden. Als Prozessanlagengröße kann dabei unter anderem beispielsweise eine Einsatzfluidstromdurchflussrate, welche insbesondere mittels Ansteuerung einer Verdichtereinheit veränderbar ist, berücksichtigt werden. Eine Modellierung einer Destillationskolonne kann insbesondere gemäß dem in der Anmeldung EP17020477.0 oder DE102017010787.4 beschriebenen Verfahren erfolgen.

Gemäß einer besonders bevorzugten Ausführungsform ist die Prozessanlage eine Erdgasanlage und der chemische, verfahrenstechnische Prozess ist eine Erdgasverflüssigung oder Erdgaszerlegung.

Im Rahmen des Verfahrens können beispielsweise besonders variierende Spezifikationen von Produkten, insbesondere Mengen und Zusammensetzungen, und Edukten, insbesondere Mengen, Zusammensetzungen und Eintrittsbedingungen, berücksichtigt werden.

Insbesondere können im Rahmen des Verfahrens ein Design und/oder eine Optimierung kombinierter Erdgasanlagen durchgeführt werden. In derartigen kombinierten Erdgasanlagen sind mindestens zwei Prozessschritte gekoppelt. Ein derartiger Prozessschritt kann beispielsweise die Abtrennung von Schwersiedern sein, insbesondere von C₂₊ oder C₃₊, zur Erzeugung von LPG (Liquefied Petroleum Gas). Ein weiterer derartiger Prozessschritt kann die Abtrennung von Stickstoff und/oder Helium sein, beispielsweise mittels einer sog. 'Nitrogen Rejection Unit' (NRU), was den Stickstoffgehalt im Erdgas auf unter ein Prozent reduzieren kann. Ein weiterer Prozessschritt kann die Verflüssigung eines Erdgasstroms zur Erzeugung von flüssigem Erdgas (LNG, Liquefied Natural Gas) sein.

Eine erfindungsgemäße Recheneinheit ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

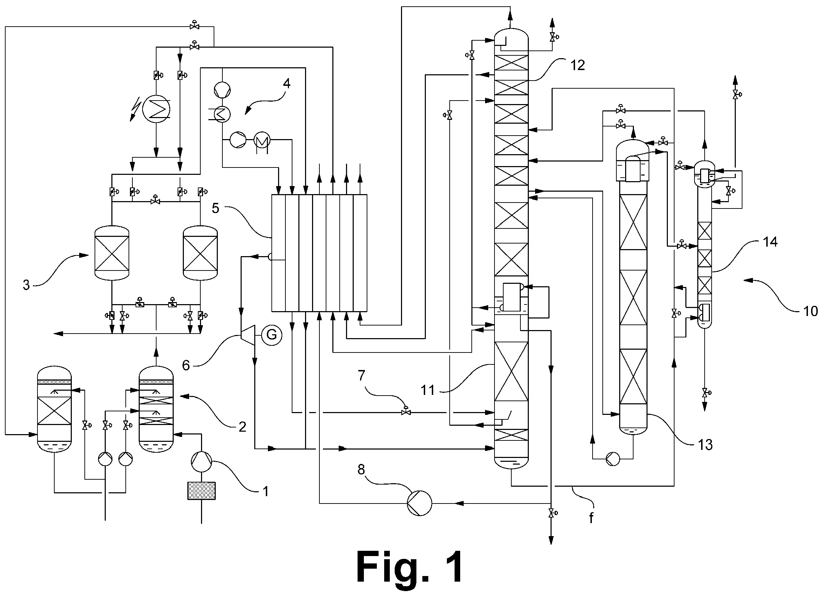

Kurze Beschreibung der Zeichnungen
- Figur 1: zeigt schematisch eine Prozesssimulation einer Prozessanlage, wie sie im Zuge einer bevorzugten Ausführungsform eines erfindungsgemäßen Verfahrens erstellt werden kann.

### Ausführliche Beschreibung der Zeichnungen

Im Rahmen einer bevorzugten Ausführungsform eines erfindungsgemäßen Verfahrens soll eine Prozessanlage, beispielsweise eine Luftzerlegungsanlage, dimensioniert werden.

Dabei wird simultan eine Vielzahl von Prozesssimulationen durchgeführt, im Zuge derer jeweils der Prozess der Luftzerlegung in der Luftzerlegungsanlage jeweils für verschiedene Werte von Prozessanlagengrößen und für verschiedene Werte von Prozessparametern simuliert wird.

Im Zuge jeder dieser Prozesssimulationen wird jeweils ein Prozessflussdiagramm ("flow sheet") verwendet, welches die Luftzerlegungsanlage modelliert. Die Luftzerlegungsanlage bzw. deren einzelne Komponenten sowie die in den einzelnen Komponenten stattfindenden Teilprozesse der Luftzerlegung werden dabei durch chemische, physikalische, mathematische Zusammenhänge in Form von Gleichungen theoretisch beschrieben.

Ein Beispiel einer derartigen Prozesssimulation, wie sie im Zuge einer bevorzugten Ausführungsform des erfindungsgemäßen Verfahrens erstellt werden kann, ist in Figur 1 schematisch dargestellt.

Die in dem Flussdiagramm simulierte Luftzerlegungsanlage verfügt unter anderem über einen Hauptluftverdichter 1, eine Vorkühleinrichtung 2, ein Reinigungssystem 3, eine Nachverdichteranordnung 4, einen Hauptwärmetauscher 5, eine Entspannungsturbine 6, eine Drosseleinrichtung 7, eine Pumpe 8 und ein Destillationssäulensystem 10. Das Destillationssäulensystem 10 umfasst im dargestellten Beispiel eine klassische Doppelsäulenanordnung aus einer Hochdrucksäule 11 und einer Niederdrucksäule 12 sowie eine Rohargonsäule 13 und eine Reinargonsäule 14.

In der simulierten Luftzerlegungsanlage wird im Zuge einer simulierten Luftzerlegung ein Einsatzluftstrom mittels des Hauptluftverdichters 1 über ein nicht bezeichnetes Filter angesaugt und verdichtet. Der verdichtete Einsatzluftstrom wird der mit Kühlwasser betriebenen Vorkühleinrichtung 2 zugeführt. Der vorgekühlte Einsatzluftstrom wird in dem Reinigungssystem 3 aufgereinigt. In dem Reinigungssystem 3, das typischerweise ein Paar von im Wechselbetrieb eingesetzten Adsorberbehältern umfasst, wird der vorgekühlte Einsatzluftstrom weitgehend von Wasser und Kohlendioxid befreit.

Stromab des Reinigungssystems 3 wird der Einsatzluftstrom in zwei Teilströme aufgeteilt. Einer der Teilströme wird auf dem Druckniveau des Einsatzluftstroms in dem Hauptwärmetauscher 5 vollständig abgekühlt. Der andere Teilstrom wird in der Nachverdichteranordnung 4 nachverdichtet und ebenfalls in dem Hauptwärmetauscher 5 abgekühlt, jedoch nur auf ein Zwischentemperaturniveau. Dieser sogenannte Turbinenstrom wird nach der Abkühlung auf das Zwischentemperaturniveau mittels der Entspannungsturbine 6 auf das Druckniveau des vollständig abgekühlten Teilstroms entspannt, mit diesem vereinigt, und in die Hochdrucksäule 11 eingespeist.

In der Hochdrucksäule 11 werden eine sauerstoffangereicherte flüssige Sumpffraktion sowie eine stickstoffangereicherte gasförmige Kopffraktion gebildet. Die sauerstoffangereicherte flüssige Sumpffraktion wird aus der Hochdrucksäule 11 abgezogen, teilweise als Heizmedium in einem Sumpfverdampfer der Reinargonsäule 14 verwendet und jeweils in definierten Anteilen in einen Kopfkondensator der Reinargonsäule 14, einen Kopfkondensator der Rohargonsäule 13 sowie die Niederdrucksäule 12 eingespeist. In den Verdampfungsräumen der Kopfkondensatoren der Rohargonsäule 13 und der Reinargonsäule 14 verdampfendes Fluid wird ebenfalls in die Niederdrucksäule 12 überführt.

Vom Kopf der Hochdrucksäule 11 wird das gasförmige stickstoffreiche Kopfprodukt abgezogen, in einem Hauptkondensator, der eine wärmetauschende Verbindung zwischen der Hochdrucksäule 11 und der Niederdrucksäule 12 herstellt, verflüssigt, und in Anteilen als Rücklauf auf die Hochdrucksäule 11 aufgegeben und in die Niederdrucksäule 12 entspannt.

In der Niederdrucksäule 12 werden eine sauerstoffreiche flüssige Sumpffraktion sowie eine stickstoffreiche gasförmige Kopffraktion gebildet. Erstere wird teilweise in der Pumpe 8 flüssig auf Druck gebracht, in dem Hauptwärmetauscher 5 erwärmt, und als Produkt bereitgestellt. Aus einer Flüssigkeitsrückhalteeinrichtung am Kopf der Niederdrucksäule 12 wird ein flüssiger stickstoffreicher Strom abgezogen und als Flüssigstickstoffprodukt aus der Luftzerlegungsanlage ausgeführt werden. Ein vom Kopf der Niederdrucksäule 12 abgezogener gasförmiger stickstoffreicher Strom wird durch den Hauptwärmetauscher 5 geführt und als Stickstoffprodukt auf dem Druck der Niederdrucksäule 12 bereitgestellt. Aus der Niederdrucksäule 12 wird ferner ein Strom aus einem oberen Bereich abgezogen und nach Erwärmung in dem Hauptwärmetauscher 5 als sogenannter Unreinstickstoff in der Vorkühleinrichtung 2 bzw. nach einer Aufheizung mittels eines elektrischen Heizers in dem Reinigungssystem 3 verwendet.

Insgesamt wird der Kolonne bzw. der Niederdrucksäule 12 im Zuge des simulierten Luftzerlegung Luft (AIR) zugeführt und zumindest Sauerstoff und Stickstoff jeweils gasförmig (GOX, GAN) und/oder flüssig (LOX, LIN) entnommen. Weiterhin wird üblicherweise Unreinstickstoff (UN2) abgezogen und gewünschtenfalls Edelgase wie Argon usw.

Wie oben erläutert, wird im Rahmen des Verfahrens eine Vielzahl derartiger Prozesssimulationen durchgeführt, jeweils für verschiedene Werte von Prozessanlagengrößen und für verschiedene Werte von Prozessparametern.

Dabei werden die Werte verschiedener Prozessparameter verändert, so dass unterschiedliche Prozessvarianten simuliert werden. Beispielsweise werden als derartige Prozessparameter eine Eduktmenge und Eduktqualität verändert. Für eine Veränderung der Eduktmenge kann beispielsweise ein Volumen- oder Massenstrom bzw. eine Durchflussrate der mittels des Hauptluftverdichters 1 angesaugten Einsatzluft verändert werden. Als Eduktqualität kann beispielsweise die Temperatur der Luft verändert werden oder es können Verunreinigungen in der Luft verändert werden.

Ferner werden als Prozessparameter beispielsweise Produktmengen und Produktqualitäten verändert, beispielsweise Mengen und Zusammensetzungen des aus der Niederdrucksäule 12 abgezogenen flüssigen Stickstoffs und des flüssigen Sauerstoffs.

Die Produktmengen und Produktqualitäten werden für die einzelnen Simulationen insbesondere mit einer spezifischen Gewichtung versehen. Je höher die anteiligen Werte für diese Gewichtung, desto wichtiger ist die Vorgabe dieses Prozessparameters.

Weiterhin werden für die Vielzahl der Simulationen als Wert für die Prozessanlagengröße beispielsweise die gesamte Wärmeübertragerfläche sowie deren Aufteilung zwischen Seitenabzügen des Hauptwärmetauschers 5 verändert. Der Wärmeübergangskoeffizient des Hauptwärmetauschers 5 ist in erster Näherung beispielsweise von der Strömungsgeschwindigkeit und der Zusammensetzung der Ströme abhängig. Die relative, geometrische Lage von Seitenabzügen sowie die verwendete Baugröße des Wärmeübertrages sind in allen Simulationen gleich.

Als weitere Prozessanlagengröße werden Strömungsquerschnitte verändert, beispielsweise Strömungsquerschnitte der Teilströme stromab des Reinigungssystems 3. Druckverluste in Rohrleitungen und Apparaten sind in erster Näherung von der Strömungsgeschwindigkeit abhängig.

Weiterhin werden als Prozessanlagengröße Höhe und Durchmesser der Kolonne bzw. der Niederdrucksäule 12 verändert. Die Wirksamkeit des Stoffübergangs ist dabei von der Gas- und Flüssigkeitsbelastung abhängig, der Druckverlust von der Strömungsgeschwindigkeit, dem Typ des Bodens und der theoretischen Bodenzahl.

Der Wirkungsgrad der Luftzerlegungsanlage ist insbesondere von den optimalen Betriebspunkten, den Massenströmen, den Saug- und Enddrücken und von den Eintritts- bzw. Zwischenkühltemperaturen in den eingesetzten Verdichtern abgängig. Diese Prozessanlagengrößen bzw. der Designpunkt der Verdichter, in der Regel der optimale Betriebspunkt, werden ebenfalls im Zuge der Simulationen verändert.

Weiterhin können für die Simulationen Randbedingungen vorgegeben werden, beispielsweise thermische Spannungen in dem Hauptwärmetauscher 5, hydraulische Begrenzungen z.B. der Flutpunkte von Kolonneneinbauten, sowie Pump- und Belastungsgrenzen der Hauptluftverdichter 1, der Nachverdichter 4, der Drosseleinrichtung 7 und der Pumpe 8.

Durch die Veränderung der entsprechenden Prozessanlagengrößen werden somit jeweils verschiedene Ausgestaltungen bzw. Prozesstopologien der Luftzerlegungsanlage simuliert. Durch die Veränderung der entsprechenden Prozessparameter werden jeweils verschiedene Prozessvarianten bzw. Betriebsfälle simuliert. Insbesondere wird im Zuge der Vielzahl von Simulationen für jede der verschiedenen Prozesstopologien der Luftzerlegungsanlage jede Prozessvariante simuliert.

Insbesondere werden die Abhängigkeiten der verschiedenen Betriebsfälle untereinander in den Simulationen simultan implementiert. Somit sind beispielsweise Korrelationen der Veränderungen der Werte der Prozessanlagengrößen sowie der Prozessparameter parallel bzw. simultan in den einzelnen Prozesssimulationen implementiert. Insbesondere sind somit Korrelationen bzw. Abhängigkeiten einzelner Betriebsfälle bzw. einzelner Prozessvarianten untereinander implementiert.

Aus den verschiedenen Simulationen werden optimale Werte für die Prozessanlagengrößen und für die Prozessparameter derart ausgewählt, dass vorgegebene Bedingungen erfüllt sind. Die einzelnen durchgeführten Prozesssimulationen werden zu diesem Zweck simultan über eine gemeinsame Zielfunktion optimiert. Diese Zielfunktion setzt sich beispielsweise aus den Kriterien Betriebsmittelbedarf, Betriebskosten und Investitionskosten zusammen.

Indem die einzelnen durchgeführten Prozesssimulationen simultan über diese gemeinsame Zielfunktion optimiert werden, werden optimale Werte für die Prozessanlagengrößen und die Prozessparameter ausgewählt, so dass als vorgegebene Bedingungen erfüllt sind, dass der Betriebsmittelbedarf, die Betriebskosten und die Investitionskosten jeweils möglichst klein sind.

Gemäß den auf diese Weise ausgewählten optimalen Werten für die entsprechenden Prozessanlagengrößen und die entsprechenden Prozessparameter wird eine Dimensionierung gefunden, gemäß welcher die Luftzerlegungsanlage gebaut und betrieben werden kann.

Somit wird eine Auswahl einer geeigneten Topologie durch simultane Optimierung einer Vielzahl möglicher Prozessvarianten unter exakt den gleichen Randbedingungen durchgeführt. Ferner wird eine Minimierung des Bedarfs an Betriebsmitteln, Betriebskoten bzw. Investitionskosten unter Berücksichtigung einer Vielzahl möglicher Betriebsfälle ein und derselben Prozesstopologie durchgeführt.

## Patentansprüche

1. Verfahren zum Dimensionieren einer Prozessanlage zum Durchführen eines chemischen, verfahrenstechnischen Prozesses, insbesondere einer Luftzerlegungsanlage oder einer Erdgasanlage,
wobei eine Vielzahl von Prozesssimulationen durchgeführt wird, im Zuge derer jeweils der Prozess in der Prozessanlage jeweils für verschiedene Werte von Prozessanlagengrößen und für verschiedene Werte von Prozessparametern simuliert wird,
wobei für die Vielzahl von Simulationen jeweils Gewichtungen für verschiedene Werte von Prozessparametern berücksichtigt werden,
wobei aus den verschiedenen Simulationen optimale Werte für die Prozessanlagengrößen und/oder für die Prozessparameter derart ausgewählt werden, dass wenigstens eine vorgegebene Bedingung erfüllt ist.

2. Verfahren nach Anspruch 1, wobei für die Vielzahl von Prozesssimulationen simultan oder zumindest im Wesentlichen simultan überprüft wird, ob die wenigstens eine vorgegebene Bedingung erfüllt ist.

3. Verfahren nach Anspruch 1 oder 2, wobei als Prozessparameter für die Simulationen eine oder mehrere der folgenden Größen verwendet werden:
- eine Produktmenge,
- eine Produktqualität,
- eine Eduktmenge,
- eine Eduktqualität,
- eine Umgebungsbedingung,
- ein Energiepreis,
- eine Vergütungsbedingung,
- eine Verfügbarkeit von Komponenten der Prozessanlage,
- bauliche oder transportbedingte Randbedingungen an verfahrenstechnische Komponenten der Prozessanlage.

4. Verfahren nach einem der vorstehenden Ansprüche, wobei die wenigstens eine vorgegebene Bedingung von wenigstens einer Kostengröße abhängt

5. Verfahren nach Anspruch 4, wobei die wenigstens eine vorgegebene Bedingung erfüllt ist, wenn die wenigstens eine Kostengröße eine Schwelle nicht über- oder unterschreit und/oder möglichst groß oder möglichst klein ist.

6. Verfahren nach Anspruch 4 oder 5, wobei eine oder mehrere der folgenden Größen als die wenigstens eine Kostengröße verwendet werden:
- ein Bedarf an Betriebsmitteln,
- ein Bedarf an Energie,
- ein Produktbedarf,
- eine Eduktverfügbarkeit,
- Betriebskosten,
- Investitionskosten,
- Einhaltung von Baubarkeitsbeschränkungen,
- Produktausbeuten,
- Einsatzstoffmengen,
- eine Prozessanlagenbelastung,
- eine Prozessanlagenlebensdauer.

7. Verfahren nach einem der vorstehenden Ansprüche, wobei als Prozessanlagengrößen eine oder mehrere einen Wärmeübertrager (5) der Prozessanlage charakterisierende Größen verwendet werden, insbesondere eine gesamte Wärmeübertragerfläche und/oder eine Aufteilung von Wärmeübertragerflächen zwischen Seitenabzügen.

8. Verfahren nach einem der vorstehenden Ansprüche, wobei als Prozessanlagengrößen eine oder mehrere eine Fluidströmung durch die Prozessanlage beeinflussende Größe verwendet wird, insbesondere ein Strömungsquerschnitt und/oder ein Durchmesser eines Elements der Prozessanlage.

9. Verfahren nach einem der vorstehenden Ansprüche, wobei als Prozessanlagengrößen eine oder mehrere Dimensionen der Prozessanlage verwendet werden, insbesondere ein Kolonnendurchmesser und/oder eine Kolonnenhöhe.

10. Verfahren nach einem der vorstehenden Ansprüche, wobei als Prozessanlagengrößen eine oder mehrere einen Wirkungsgrad des Prozesses beeinflussende Größe verwendet wird, insbesondere ein Designpunkt der Prozessanlage und deren Komponenten.

11. Verfahren nach einem der vorstehenden Ansprüche, wobei Randbedingungen für Komponenten der Prozessanlage vorgegeben sind.

12. Recheneinheit, die dazu eingerichtet ist, ein Verfahren nach einem der vorstehenden Ansprüche durchzuführen.

13. Computerprogramm, das eine Recheneinheit dazu veranlasst, ein Verfahren nach einem der Ansprüche 1 bis 11 durchzuführen, wenn es auf der Recheneinheit ausgeführt wird.

14. Maschinenlesbares Speichermedium mit einem darauf gespeicherten Computerprogramm nach Anspruch 13.
